# EUROPÄISCHE PATENTSCHRIFT

(11) **EP 2 952 824 B1**
(45) Veröffentlichungstag und Bekanntmachung des Hinweises auf die Patenterteilung: **23.08.2017**
(21) Anmeldenummer: 15170345.1
(22) Anmeldetag: 02.06.2015
(51) Int. Cl.: F24J 2/05, C02F 1/14, F24J 2/07, F24J 2/14, F24J 2/50, B01D 1/00, B01D 5/00

(54) **VORRICHTUNG UND VERFAHREN ZUR SOLAREN DESTILLATION**
DEVICE AND METHOD FOR SOLAR DISTILLATION
DISPOSITIF ET PROCÉDÉ DESTINÉS À LA DISTILLATION SOLAIRE

(30) Priorität: 03.06.2014 DE 202014102597 U; 16.09.2014 DE 102014113291
(43) Veröffentlichungstag der Anmeldung: 09.12.2015
(73) Patentinhaber: Broeckelmann, Tim, 44225 Dortmund (DE); Frauenkron, Lothar, 44225 Dortmund (DE); Huelskoetter, Sven, 48147 Münster (DE)
(72) Erfinder: BROECKELMANN, Tim, 44225 Dortmund (DE)
(74) Vertreter: Kalkoff & Partner

(56) Entgegenhaltungen:
- WO-A1-2009/129572
- DE-A1-102008 055 835
- US-A- 4 010 080
- US-A- 4 210 121
- US-A- 4 323 052
- US-A- 4 504 362
- US-A- 4 749 447
- US-A1- 2003 092 876

## Beschreibung

Die Erfindung betrifft eine Vorrichtung und eine Verfahren zur Destillation einer Flüssigkeit. Insbesondere betrifft die Erfindung eine Destillationsvorrichtung und ein Destillationsverfahren, die durch Sonnenstrahlung mit Energie versorgt werden.

Die Destillation hat als Trennverfahren vielfältige Anwendungen in der Technik. Insbesondere im Bereich der chemischen Industrie wird die Destillation mit verschiedenen Ausgangsflüssigkeiten genutzt.

Destilliertes Wasser findet umfangreiche Anwendung in verschiedenen industriellen Bereichen, bspw. als Lösungs- oder Reinigungsmittel. Allerdings ist für die Destillation ein hoher Energieeinsatz erforderlich.

Die Verwendung von Sonnenenergie zum Betrieb einer Destillationsvorrichtung ist an sich bekannt. Die DE-OS 26 04 978 beschreibt eine mit Sonnenergie betreibbare Destilliervorrichtung, bei der die zu destillierende Flüssigkeit, bspw. Wasser, von einem Luftraum durch eine Silikonmembran getrennt ist. Die Silikonmembran ist sinuswellenförmig gekrümmt und mit einer Abdeckung aus Glas oder einem anderen, für Sonnenergie durchlässigen Material verklebt. Die durch die Abdeckung eingestrahlte Sonnenergie wird von der Silikonmembran absorbiert, so dass Dampf die Membran durchdringt und an der Unterseite der Abdeckung kondensiert.

Die AT 507 782 A4 beschreibt eine portable, solarthermische Vorrichtung zur Herstellung von Frisch-Wasser aus Abwässern, bzw. Salzwasser. Die Vorrichtung weist dabei einen geschlossenen Fluidkreislauf auf. Dieser besteht aus miteinander verbundenen Rohr- oder Schlauchelementen mit einem Abwasserzulauf und einem Frischwasserablauf. Der Fluidkreislauf umfasst einen Heizabschnitt zur Erwärmung und Verdunstung des Abwassers. Der Heizabschnitt weist eine teilweise transparente, isolierende Hülle auf, so dass Sonnenstrahlung durch die Hülle auf einen Solarkollektor gelangen kann. Der Solarkollektor kann die thermische Energie der Sonnenstrahlung auf eine im Inneren des Heizabschnitts gelegene Verdunstungsfläche konzentrieren. An den Heizabschnitt grenzt ein senkrechter Kondensierungsabschnitt an, in dem das Frischwasser kondensieren und das Abwasser vorgewärmt werden kann.

In der US 2008 / 0 073 198 A1 wird eine leichte und kompakte Solardestille beschrieben, welche eine zweiteilige Destillationskammer und einen verstellbaren Solarkollektor aufweist. Die Destillationskammer umfasst hauptsächlich zwei Teile, einen Trog und eine Abdeckung. Im Trog ist die zu destillierende Flüssigkeit angeordnet. Bevorzugt ist seine Unterseite geschwärzt, so dass ein Erwärmen der Flüssigkeit für die Destillation vereinfacht wird. An der Abdeckung kann das Destillat kondensieren und über Rinnen abgeleitet werden kann. Die Abdeckung kann transparent sein und Kühlrippen aufweisen, welche eine Kondensation verbessern.

Eine Solardestille für Meerwasser ist in der US 4 504 362 A offenbart. Diese ist bevorzugt so ausgestaltet, dass der Solarkollektor, welcher Licht auf ein Absorberrohr fokussiert, als Schwimmkörper dienen kann. In dem Absorberrohr wird Meerwasser solarthermisch erhitzt und verdampft und ist über Destillationsbrücken mit einem Kondensationsrohr verbunden. Das Kondensationsrohr liegt bevorzugt unterhalb der Wasserlinie, so dass es vom Meerwasser gekühlt wird und die Kondensation des Dampfes verbessert werden kann.

In der US 4 749 447 A wird eine Solardestille beschrieben, bei der Absorberrohre und Kondensationsrohre thermisch so miteinander gekoppelt sind, dass die Kondensationswärme für eine Erwärmung von Flüssigkeit in den Absorberrohren genutzt werden kann. Die Kopplung geschieht direkt über wärmeleitende Elemente, wie bspw. Metallrippen, die Wände der Rohre oder auch eine konzentrische Anordnung eines Kondensationsrohrs in einem Absorberrohr. Absorberrohre und Kondensationsrohre sind über Destillationsbrücken miteinander verbunden. Diese Destillationsbrücken weisen Ventile und Pumpen auf, so dass in den Kondensationsrohren ein höherer Druck herrscht als in den Absorberrohren. Dadurch kann eine Kondensation des Destillats auch noch bei höheren Temperaturen ermöglicht werden. Die Rohre können in einer teilweise oder vollständig transparenten Hülle angeordnet sein, welche bevorzugt gasdicht ist.

Es ist Aufgabe der Erfindung, eine einfache und kostengünstige Destillationsvorrichtung vorzuschlagen, bei der mit einer besonders effizienten Nutzung der Sonnenergie eine hohe Destillationsleistung erzielt wird.

Erfindungsgemäß wird diese Aufgabe gelöst durch eine Vorrichtung gemäß Anspruch 1 und einem Verfahren gemäß Anspruch 14. Abhängige Ansprüche beziehen sich auf vorteilhafte Ausführungsformen der Erfindung.

Die erfindungsgemäße Vorrichtung weist zunächst ein Absorberrohr auf. Dieses ist mindestens zum Teil mit der zu destillierenden Flüssigkeit füllbar, so dass das gebildete Flüssigkeitsreservoir in thermischem Kontakt mit der Wandung des Absorberrohrs steht.

Eine Spiegelfläche dient zur Bündlung der Sonnenstrahlung im Bereich des Absorberrohrs, so dass das Absorberrohr durch Aufnahme von Energie aus der Sonnenstrahlung erwärmt wird. Bei ausreichender Erwärmung verdampft ein Teil der Flüssigkeit im Absorberrohr.

Über eine Destillationsbrücke ist das Absorberrohr mindestens mit einem ersten Kondensationsrohr gekoppelt, so dass der Dampf in das erste Kondensationsrohr geleitet wird. Das erste Kondensationsrohr dient zur Kondensation des Dampfes. Es ist im Abstand von dem Absorberrohr angeordnet, wobei es bevorzugt parallel hierzu verläuft.

Erfindungsgemäß ist eine transparente Hülle vorgesehen, die thermisch mit dem Kondensationsrohr gekoppelt ist und das Absorberrohr umschließt. Dabei verläuft die Hülle in einem Abstand vom Absorberrohr, so dass ein Zwischenraum zwischen der Hülle und dem Absorberrohr verbleibt. Wie im Zusammenhang mit bevorzugten Ausführungsformen ersichtlich wird, muss die Hülle nicht durchgängig aus einem Material gebildet sein, sondern es können verschiedene Elemente und Materialien gemeinsam eine Hülle bilden, die das Absorberrohr umschließt.

Durch die Transparenz der Hülle können Lichtstrahlen von dieser ungehindert auf das Absorberrohr treffen. Die transparente Hülle muss dabei nicht zwingend über ihre gesamte Fläche durchsichtig, aber mindestens teilweise transparent sein. Die Hülle ist mindestens im Bereich der thermischen Kopplung mit dem Kondensationsrohr transparent. Weiter ist die Hülle in solchen Bereichen transparent, aus denen Lichtstrahlen auf das Absorberrohr treffen können. Wenn aus bestimmten Bereichen der Hülle keine Lichtstrahlung zu erwarten ist, da diese Bereiche bspw. von anderen Teilen der Vorrichtung, wie z.B. dem Kondensationsrohr verdeckt sind, muss die Hülle an diesen Stellen auch nicht zwingend durchsichtig sein. Es kann sogar zweckmäßig sein, dass die Hülle oder Teile hiervon an solchen Stellen spiegelnde Eigenschaften aufweisen, damit von einer anderen Seite einfallende Lichtstrahlen auf den Absorber reflektiert werden können.

Durch die erfindungsgemäße Vorrichtung wird eine Nutzung der Kondensationswärme und Steigerung der Effizienz ermöglicht. Bei der Kondensation am Kondensationsrohr erwärmt sich dieses durch die freiwerdende Kondensationswärme, wobei sich durch die thermische Kopplung auch die das Absorberrohr umgebende Hülle erwärmt. Die Hülle ist bevorzugt gasdicht, so dass ein abgeschlossener Isolierraum gebildet ist, aus dem im Wesentlichen keine Wärme durch Konvektion entweicht. Hierfür kann es bereits ausreichen, wenn der Isolierraum so weit abgeschlossen ist, dass er bspw. winddicht ist. Darüber hinaus kann der Isolierraum so gut dichtend abgeschlossen sein, dass darin bspw. ein Füllgas auf gegenüber der Atmosphäre erhöhtem oder verringerten Druck (bis zum Vakuum) enthalten ist.

Das Absorberrohr befindet sich somit in einem Isolierraum innerhalb der Hülle, der durch die Erwärmung auf einer höheren Temperatur gehalten wird als die Umgebung. Hierdurch ergibt sich auch am Absorberrohr eine höhere Temperatur, da dessen direkte Umgebung erwärmt ist und das Absorberrohr deshalb weniger Wärme an seine Umgebung abgibt.

Mit der erfindungsgemäßen Vorrichtung ist durch diese zusätzliche Ausnutzung der Kondensationswärme ein besonders effizienter Destillationsvorgang möglich. Durch die erhöhte Temperatur des Absorberrohres reicht bereits eine weniger intensive Sonneneinstrahlung für die Destillation von Wasser aus, und es können auch Flüssigkeiten mit höherem Siedepunkt verdampft werden.

Dabei ist der Aufbau der erfindungsgemäßen Vorrichtung durch die rohrförmige Ausbildung und bevorzugt parallele Anordnung eines Absorberrohrs und eines Kondensationsrohrs besonders effizient und kostengünstig herstellbar.

In vorteilhaften Ausführungsformen können das Absorberrohr, das Kondensationsrohr und die Hülle als Rohre mit verschiedenen Querschnittsformen ausgebildet sein. Dies umfasst runde oder überwiegend runde Querschnittsformen ebenso wie bspw. rechteckige, dreieckige oder sonstige Querschnittsformen. Beispielsweise in einer runden Hülle kann das Absorberrohr zentral angeordnet werden, so dass bei bspw. ebenfalls rundem Querschnitt des Absorberrohres die Hülle von dessen Wand immer gleich weit entfernt ist. So können Temperaturunterschiede im Absorberrohr vermieden werden.

In einigen Ausführungsformen kann die Hülle auch teilweise durch Bereiche des Spiegels, bspw. dessen Basis gebildet werden. So kann z. B. eine durchsichtige Scheibe in einen bspw. rinnen- oder parabolförmigen Spiegel so eingesetzt sein, dass diese Scheibe, als Außenscheibe, zusammen mit dem Spiegel eine Hülle um das Absorberrohr bilden kann, welche in Richtung der einfallenden Lichtstrahlen transparent ist. Dies ermöglicht einem vereinfachten Aufbau der Hülle und dennoch eine Einstrahlung von Licht aus vielen Richtungen auf das Absorberrohr.

Vorteilhaft ist es, wenn die Hülle mindestens teilweise aus einem Glas besteht, bevorzugt mit vorteilhaften Eigenschaften der Wärmeleitung und einer hohen Transmission, z.B. Borosilikatglas. Weiter kann bspw. auch transparenter Kunststoff, z.B. Plexiglas verwendet werden.

Das Absorberrohr ist vorteilhafterweise so in der Vorrichtung angeordnet, dass es in einem Brennpunkt der Spiegelflächen steht. Es kann bevorzugt einen runden oder vieleckigen Querschnitt aufweisen. Nach einer Weiterbildung der Erfindung ist der Querschnitt des Absorberrohrs ein Dreieck, insbesondere ein gleichschenkeliges. Dabei ist ein spitzwinkliges Dreieck, bspw. mit einem Winkel von weniger als 60° zwischen den gleich langen Seiten bevorzugt. Bei einem solchen Querschnitt können die langen Seiten des Dreiecks so zu den Spiegelflächen ausgerichtet sein, dass möglichst viel Strahlung auf das Absorberrohr treffen kann. So kann die Effizienz der Vorrichtung weiter gesteigert werden.

In bevorzugten Weiterbildungen der Vorrichtung besteht das Absorberrohr aus korrosionsfestem und dampfbeständigen Material, welches bevorzugt thermisch stabil ist, bspw. einem Edelstahl, Glas oder bestimmten Polymeren. Für eine bessere Absorption der Lichtstrahlen ist es vorteilhaft, wenn das Absorberrohr geschwärzt, bspw. bei einem Metallrohr galvanisiert, ist.

Bevorzugt ist das erste Kondensationsrohr in direktem Kontakt mit der transparenten Hülle angeordnet, um so die bei der Kondensation entstehende Wärme durch Konduktion auf die Hülle zu übertragen. Wenn die Hülle als Rohr ausgebildet ist, kann bspw. das Kondensationsrohr an die Rohrinnenseite angebracht sein. Bei Weiterbildungen der Erfindung, in denen die Hülle zumindest teilweise aus einer transparenten Platte, bspw. einer Glasplatte, im Strahlengang besteht, kann das Kondensationsrohr direkt im Kontakt mit der transparenten Platte angeordnet sein. In einer bevorzugten Ausführung sind zwei transparente Platten in einem Winkel zueinander angeordnet, wobei das Kondensationsrohr im Kontakt mit einer der transparenten Platten angeordnet ist.

Besonders bevorzugt erstreckt sich in letztgenannten Fall die zweite transparente Platte als eine Innenscheibe von der ersten transparenten Platte, die als Außenscheibe angeordnet ist, bis zum Spiegel, bevorzugt zu seiner Basis. Hierdurch können dadurch zwei Isolierräume gebildet werden. In einem ersten Isolierraum können dann das Absorberrohr, Destillierbrücke und Kondensationsrohr angeordnet sein. Im zweiten Isolierraum kann entweder dieser Aufbau wiederholt werden, oder diese Kammer dient bspw. als Wärmespeicher. Während des Betriebes der Vorrichtung kann dieses Reservoir zunächst durch überschüssige Wärme gespeist werden. Kommt es zu Schwankungen der Sonneneinstrahlung, bspw. durch Bewölkung, so kann der Wärmespeicher als Puffer dienen und diese Schwankungen auffangen. Die Destillation kann dadurch gleichmäßiger verlaufen, was einen Gewinn an Effizienz darstellt.

Um eine passive Kühlung zu erreichen, kann das erste Kondensationsrohr in thermischer Kopplung mit der Spiegelfläche angeordnet werden, bevorzugt in direktem Kontakt. Gemäß einer Weiterbildung der Erfindung kann zudem das erste Kondensationsrohr an ein zweites Kondensationsrohr angeschlossen sein, so dass im ersten Kondensationsrohr nicht kondensierter Dampf in das zweite Kondensationsrohr gelangt. Das zweite Kondensationsrohr kann dabei so angeordnet werden, dass es in thermischem Kontakt mit der Spiegelfläche steht. Auf diese Weise wird eine effiziente passive Kühlung, nämlich Abgabe der Wärme des zweiten Kondensationsrohrs ermöglicht, so dass die Kondensation des noch verbleibenden Dampfes erreicht wird. Alternativ oder zusätzlich kann auch eine aktive Kühlung verwendet werden.

Gemäß einer Weiterbildung der Erfindung ist weiter bevorzugt, mittels eines Ventils einen gewünschten Füllstand der Flüssigkeit im Absorberrohr zu erreichen. Hierbei kann insbesondere vorgesehen sein, dass das Ventil einen Zufluss von Flüssigkeit nur soweit zulässt, bis ein gewünschter maximaler Füllstand erreicht ist. Bspw. kann das Ventil mit einem Schwimmer gesteuert sein.

Eine Weiterbildung der Erfindung sieht vor, dass die Spiegelfläche rinnenförmig ausgebildet ist, wobei das Absorberrohr innerhalb der rinnenförmigen Spiegelfläche angeordnet ist. Ein solcher Aufbau lässt sich besonders gut in großen Anlagen realisieren, wobei über eine Fläche mehrere parallel anzuordnende Rinnen bevorzugt werden. Die rinnenförmige Anordnung ist zudem besonders vorteilhaft, wenn mindestens die Spiegelfläche, bevorzugt auch das Absorberrohr um eine Längsachse drehbar angeordnet ist, um eine Nachführung relativ zur Sonne zu ermöglichen. Besonders bevorzugt erfolgt dabei eine Drehung der gesamten Einheit aus Spiegelfläche, Absorberrohr, Hülle und erstem Kondensationsrohr.

Vorteilhafterweise kann ein Wärmetauscher vorgesehen sein, um mittels des Kondensats die zum Absorberrohr zugeführte Flüssigkeit vorzuwärmen. Hiermit wird die Effizienz erhöht.

Gemäß einer Weiterbildung der Erfindung kann ein Auffangbehälter für das Kondensat vorgesehen sein, bevorzugt unterhalb der Spiegelfläche. Dabei ist es besonders bevorzugt, wenn der Auffangbehälter als Fundament vorgesehen ist zum Tragen mindestens der Spiegelfläche und des Absorberrohres.

Die Destillierbrücken können gemäß einer Weiterbildung der Erfindung einen Verbindungsraum zwischen Absorber- und Kondensationsrohr bilden, durch den hindurch Dampf aus dem Absorberrohr in das Kondensationsrohr geleitet wird, wo er kondensiert. Bevorzugt kann in dem Verbindungsraum zwischen dem Absorberrohr und dem Kondensationsrohr, durch den die verdampfte Flüssigkeit strömt, ein Stoff angeordnet werden, der extrahiert, d.h. vom durchströmenden Dampf gelöst werden soll. Bevorzugt kann bspw. ein Material, das einen zu extrahierenden Stoff enthält, bspw. als Inhaltsstoff oder Verunreinigung, im Verbindungsraum angeordnet sein. So kann der durchströmende Dampf zur Extraktion genutzt werden. Er löst den zu extrahierenden Stoff und transportiert diesen mit sich.

Gemäß einer Weiterbildung kann im Verbindungsraum ein Einsatz zur Aufnahme des Stoffs bzw. von diesen enthaltendem Material angeordnet sein. Dieser kann bspw. einlegbar oder einschiebbar sein.

Gemäß einer Weiterbildung kann der Einsatz als Behälter mit einer für die verdampfte Flüssigkeit durchlässigen Wandung ausgebildet sein, beispielsweise als Sieb (auch als Lochblech) bspw. aus Stahl, oder unter Verwendung einer Silikonmembran. Generell sollte ein Einsatz undurchlässig sein für das Material selbst, hingegen durchlässig für den Dampf und damit transportierte extrahierte Stoffe.

So kann der Stoff, bzw. das zu behandelnde Material, im Übergang zwischen dem Absorberreservoir und dem Kondensationsraum gehalten werden und ein Durchgang des Dampfes durch diesen Bereich ermöglicht werden.

Ein erfindungsgemäßes Verfahren zur solaren Destillation umfasst eine Bündelung von Sonnestrahlung durch die Spiegelfläche auf das mindestens teilweise mit Flüssigkeit gefüllte Absorberrohr. Das Absorberrohr nimmt Energie aus der Sonnenstrahlung auf und verdampft die Flüssigkeit. Der Dampf strömt durch eine Destillierbrücke von dem Absorberrohr zum Kondensationsrohr. Das Kondensationsrohr ist thermisch mit einer transparenten Hülle gekoppelt, welche das Absorberrohr so umschließt, dass ein Zwischenraum zwischen Absorberrohr und Hülle verbleibt. Der Dampf kondensiert in dem Kondensationsrohr. Bei der Kondensation wird Wärme freigesetzt, welche das Kondensationsrohr erwärmt. Über die thermische Kopplung von Kondensationsrohr und transparenter Hülle überträgt sich die Wärme auf die Hülle. Die erwärmte Hülle erhitzt den Zwischenraum, wodurch das Absorberrohr weniger Wärmeenergie an diese abgibt. Das erfindungsgemäß Verfahren macht daher Kondensationsenthalpie für eine Effizienzsteigerung bei solarer Destillation nutzbar. Durch diese Effizienzsteigerung lässt sich eine Solardestille auch in höheren Breitengraden oder bei geringer Sonnenstrahlung noch effektiv betreiben, bzw. ist auch eine Destillation von Stoffen mit einem höheren Siedepunkt möglich.

Nachfolgend werden Ausführungsformen der Erfindung anhand von Zeichnungen näher beschrieben. Dabei zeigen:
- Fig. 1: in schematischer Darstellung im Querschnitt eine erste Ausführungsform einer solaren Destillationsvorrichtung und
- Fig. 2: in schematischer Darstellung ein Längsschnitt durch die Vorrichtung aus Fig. 1.
- Fig. 3: in schematischer Darstellung im Querschnitt eine zweite Ausführungsform einer solaren Destillationsvorrichtung
- Fig. 4: in schematischer Darstellung im Querschnitt eine dritte Ausführungsform einer solaren Destillationsvorrichtung mit einer Möglichkeit zur Extraktion;
- Fig. 5: eine Vergrößerung eines Teils der Darstellung aus Fig. 4 und
- Fig. 6: in schematischer Darstellung ein Längsschnitt durch die Vorrichtung aus Fig. 4, Fig. 5.

In den Zeichnungen sind in schematischer Darstellung verschiedene Ausführungsformen von Destillationsanlagen gezeigt, mit denen allein durch Nutzung der Energie des Sonnenlichts eine zugeführte Flüssigkeit destilliert werden kann. Dabei ist eine Nutzung zur Gewinnung von destilliertem Wasser ebenso möglich wie die Destillation anderer Ausgangsflüssigkeiten. Im Folgenden wird zur Vereinfachung der Darstellung stets von der Destillation von Wasser ausgegangen, ohne dass die Erfindung hierauf beschränkt wäre.

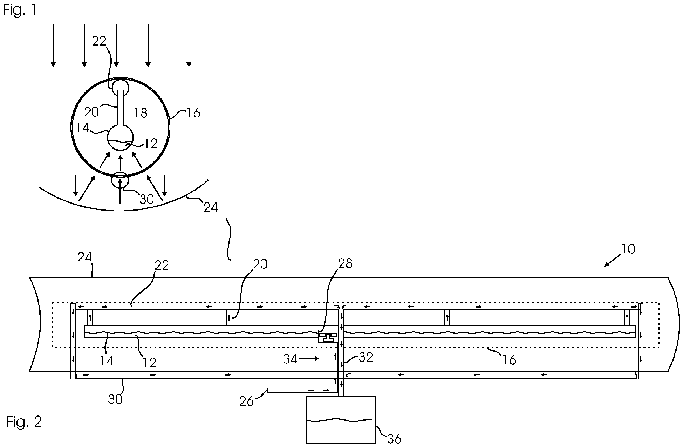

Fig. 1 und Fig. 2 zeigen eine erste Ausführungsform einer Destillationsanlage 10. Wie zunächst aus der schematischen Querschnittsdarstellung in Fig. 1 ersichtlich befindet sich das zu destillierende Wasser 12 im Inneren eines Absorberrohres 14. Das Absorberrohr 14 ist innerhalb einer gasdichten, transparenten Hülle 16 angeordnet, die bspw. aus Glas gebildet sein kann. Das Absorberrohr 12 befindet sich somit in einem abgeschlossenen Isolationsraum 18 im Inneren der Hülle 16.

Über mehrere Destillierbrücken 20, von denen eine in Fig. 1 gezeigt ist, ist das Absorberrohr 14 mit einem ersten Kondensationsrohr 22 verbunden. Eingestrahltes Sonnenlicht, hier dargestellt durch Pfeile, wird durch eine geeignet gekrümmte Spiegelfläche 24 reflektiert und in Richtung auf das Absorberrohr 14 gebündelt. Hierdurch erwärmt sich das Absorberrohr 14 bis es zum Verdampfen der darin gehaltenen Flüssigkeit 12 kommt, deren Dampf dann durch die Destillierbrücke 20 in das Kondensationsrohr 22 gelangt.

Die Hülle 16 ist direkt am Kondensationsrohr 22 befestigt und befindet sich in direktem thermischen Kontakt hiermit. Kondensiert der Dampf im Kondensationsrohr 22, so wird eine der Verdampfungsenthalpie entsprechende Menge an Kondensationswärme auf das Kondensationsrohr 22 und die damit thermisch gekoppelte Hülle 16 übertragen.

Die transparente Hülle 16 wird somit erwärmt, so dass das Absorberrohr 14 sich im Inneren des aufgeheizten Isolierraumes 18 befindet. Durch diese Anordnung des Absorberrohres 14 in dem erwärmten Isolierraum 18 innerhalb der ebenfalls erwärmten Hülle 16 gibt das Absorberrohr 14 weniger Wärmeenergie an die Umgebung ab. Das Absorberrohr 14 erreicht damit bei gleicher Sonneneinstrahlung eine höhere Temperatur als dies bei einer Anordnung ohne die Hülle 16 der Fall wäre, d. h. wenn das Absorberrohr 14 direkt der äußeren Umgebung ausgesetzt wäre.

Somit erzielt die Destillationsanlage 10 mit dem in Fig. 1 schematisch dargestellten Aufbau durch die Nutzung der Kondensationswärme eine deutliche Effizienzsteigerung. Dies kann einerseits genutzt werden, um auch bei relativ geringer Sonneneinstrahlung einen hohen Durchsatz bei der Destillation zu erreichen. Andererseits kann die erhöhte Temperatur am Absorberrohr 14 auch zur Destillation von Flüssigkeiten genutzt werden, deren Siedepunkt oberhalb dem von Wasser liegen.

In Fig. 2 ist der weitere Aufbau der Anlage 10 im Längsschnitt dargestellt. Der Spiegelreflektor 24 ist rinnenförmig ausgebildet. Das Absorberrohr 14 und das erste Kondensationsrohr 22 sind im Abstand parallel zueinander angeordnet und durch mehrere Destillierbrücken 20 miteinander gekoppelt.

Über einen Zufluss 26 wird Wasser (oder eine andere zu destillierende Flüssigkeit) durch ein Schwimmerventil 28 zum Absorberrohr 14 geführt. Mit Hilfe des Schwimmerventils 28 ist sichergestellt, dass innerhalb des Absorberrohres 14 stets ein gewünschter Füllstand beibehalten wird.

Kondensiert nicht die gesamte Flüssigkeit im ersten Kondensationsrohr 22, so kann der überschüssige Dampf in ein zweites Kondensationsrohr 30 geführt werden. Das zweite Kondensationsrohr 30 verläuft parallel sowohl zum ersten Kondensationsrohr 22 als auch zum Absorberrohr 14 und ist direkt an der Spiegelfläche 24 angebracht, so dass es in thermischen Kontakt mit der Spiegelfläche 24 steht. Hierdurch steht dem zweiten Kondensationsrohr 30 eine große Fläche zur Abgabe von Wärme zur Verfügung, so dass sichergestellt ist, dass der überschüssige Dampf kondensiert.

Das im ersten Kondensationsrohr 22 und im zweiten Kondensationsrohr 30 gewonnene Destillat wird über eine Leitung 32 in einen Auffangbehälter 36 geleitet. Dabei ist ein Wärmetauscher 34 (nicht im Detail dargestellt) vorgesehen, mit dem das zum Absorberrohr 14 zugeführte Frischwasser durch das Kondensat erwärmt wird.

Der Auffangbehälter 36 bildet ein Fundament der Anlage 10. Die Spiegelfläche 24 und die Einheit aus Absorberrohr 14, erstem Kondensationsrohr 22 und der Hülle 16 stützen sich an dem Auffangbehälter 36 ab. Dabei ist die gesamte Rinne aus dem Spiegelreflektor 24 und der Hülle 16 mit den darin befindlichen Rohren 14, 22 um eine Längsachse drehbar, so dass eine Nachführung relativ zum Sonnenstand ermöglicht ist.

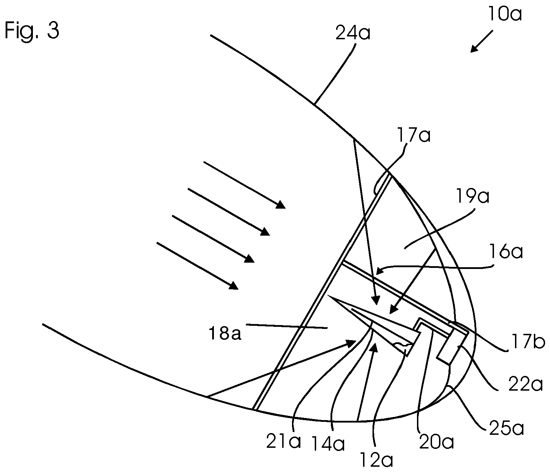

In der Fig. 3 ist eine zweite Ausführungsform einer Destillationsanlage 10a dargestellt. Das zu destillierende Wasser 12a ist in einem Absorberrohr 14a mit dreieckigem Querschnitt angeordnet, dessen Zentrum sich im Brennpunkt eines gekrümmten Spiegels 24a befindet. Über Destillierbrücken 20a, von denen hier eine dargestellt ist, ist das Absorberrohr 14a mit einem parallel zu ihm verlaufenden Kondensationsrohr 22a mit im gezeigten Beispiel rechteckigen Querschnitt verbunden. Sowohl das Absorberrohr 14a als auch das Kondensationsrohr 22a sind in einem Isolierraum 18a angeordnet, welcher von einer teilweise transparenten Hülle 16a umgeben ist.

In das Absorberrohr 14a reicht eine Trennwand 21a hinein, und lässt dabei einen Bereich in dessen Spitze frei. Diese Trennwand 21a grenzt im Absorberrohr 14a einen Bereich mit Flüssigkeit von einem Durchtritt zur Destillierbrücke 20a ab. Dadurch kann die Flüssigkeit nicht direkt in die Destillierbrücke 20a gelangen.

Die Hülle 16a ist im gezeigten Beispiel gebildet durch eine Rückwand 25a des Spiegels 24a und zwei transparente Elemente 17a,b, welche aus einem Glas mit hoher Transmission bestehen. Das eine transparente Element 17a ist als Außenscheibe so zwischen der oberen und unteren Spiegelseite angebracht, dass frontal in die Destillationsanlage einfallende Lichtstrahlen senkrecht darauf treffen. Das andere transparente Element erstreckt sich als Innenscheibe 17b von der Aussenscheibe 17a ausgehend bis zur Rückwand 25a des Spiegels 24a und steht dabei im rechten Winkel zur Aussenscheibe 17a. Die Innenscheibe 17b grenzt dadurch den Isolierraum 18a von einem Bereich 19a. Die Innenscheibe 17b steht mit dem Kondensationsrohr 22a in Kontakt und ist hierdurch mit diesem thermisch gekoppelt.

Einfallende Lichtstrahlen werden durch den Spiegel 24a auf das Absorberrohr 14a gebündelt. Durch dessen dreieckigen, spitzwinkligen Querschnitt treffen die meisten Strahlen bevorzugt auf seine beiden langen Seiten und erwärmen so das Absorberrohr 14a gleichmäßig. Das Wasser 12a verdampft dabei im Absorberrohr 14a. Der Dampf strömt um die Trennwand 21a herum und gelangt über die Destillierbrücken 20a in das Kondensationsrohr 22a.

Im Kondensationsrohr 22a kann der Dampf wieder kondensieren. Die dabei frei werdende Kondensationsenergie kann dann das Kondensationsrohr 22a erwärmen, welches diese Wärme auf die Innenscheibe 17b, und somit die Hülle 16a, überträgt.

Außerdem ist das Kondensationsrohr 22a mit der Rückwand 25a thermisch gekoppelt. Durch die Abgabe der Kondensationsenergie an den Spiegel 24a kann zum einen eine passive Kühlung erreicht werden, zum anderen wird mit der Rückwand 25a der Bereich des Spiegels 24a erwärmt, der einen Teil der Hülle 16a bildet. Hierüber kann die Hülle 16a weiter erwärmt werden.

Der Isolierraum 18a wird daher zusätzlich zu der Sonnenstrahlung auch über die Hülle 16a erhitzt. Das Absorberrohr 14a kann daher durch seine Anordnung im Isolierraum 18a höhere Temperaturen erreichen, als wenn es außerhalb dieses liegen würde. Zusätzlich zur thermischen Isolation durch die Hülle 16a wird dieser Effekt durch die thermische Kopplung des Kondensationsrohrs 22a mit der Hülle 16a noch gesteigert. Der Bereich 19a bildet eine weitere Isolierkammer, welche ebenfalls erhitzt werden und dem Isolierraum 18a als ein thermisches Reservoir dienen kann. Dadurch können bspw. witterungsbedingte Schwankungen der Temperatur und Sonneneinstrahlung aufgefangen werden, so dass ein gleichmäßigerer Betrieb der solaren Destille 10a gewährleistet wird.

Diese zweite Ausführungsform bietet daher einen ähnlichen Effizienzgewinn bei der Nutzung der Sonnenstrahlung wie die in Fig. 1 und Fig. 2 gezeigte erste Ausführungsform. Dieser Effizienzgewinn kann daher auch genutzt werden, um auch bei relativ geringer Sonneneinstrahlung größere Mengen in entsprechender Zeit zu destillieren, oder eine Destillation von Flüssigkeiten zu ermöglichen, deren Siedepunkt oberhalb dem von Wasser liegen.

Die zweite Ausführungsform kann auch weitere Elemente, welche für die erste Ausführungsform beschrieben sind, umfassen. So kann bspw. auch ein Wärmetauscher (nicht gezeigt) an einer Leitung zu einem Auffangbehälter für das Destillat vorgesehen sein, mit welchem das dem Absorberrohr 14a zugeführte Frischwasser durch das Kondensat erwärmt wird.

Außerdem kann auch ein Schwimmerventil im Zufluss zum Absorberrohr 14a vorgesehen sein. Mit Hilfe des Schwimmerventils ist sichergestellt, dass innerhalb des Absorberrohres 14 stets ein gewünschter Füllstand des Wassers (oder einer anderen zu destillierende Flüssigkeit) beibehalten wird.

In der zweiten Ausführungsform kann zudem auch ein zweites Kondensationsrohr vorgesehen sein, welches sowohl zum ersten Kondensationsrohr 22a als auch zum Absorberrohr 14a parallel verläuft und direkt an der Spiegelfläche 24a angebracht ist, so dass es in thermischen Kontakt mit der Spiegelfläche 24a steht. Dem zweiten Kondensationsrohr steht dadurch eine große Fläche zur Abgabe von Wärme zur Verfügung. Hierüber ist dass sichergestellt, dass der überschüssige Dampf kondensiert.

Die entscheidende Verbesserung dieser Destillationsanlagen 10, 10a gegenüber bekannten solaren Destillen liegt in der Ausnutzung der Kondensationswärme. Dies wird durch die Hüllen 16, 16a erreicht. Aufgrund von deren luftdichter Ausbildung sind Wärmeverluste minimiert. Dabei werden die Hüllen 16, 16a durch die Anordnung am ersten Kondensationsrohr 22, 22a erwärmt, insbesondere mittels Konduktion. Je nach Ausführung kann die Hülle 16, 16a ganz oder in Teilen aus speziellem Solarglas (bspw. eisenarmen Glas oder Borosilikatglas) für optimierte Wärmestrahlungseigenschaften bestehen.

Zusätzlich und/oder alternativ zu den dargestellten Ausführungen und Elementen sind eine Vielzahl von Ergänzungen bzw. Abwandlungen möglich. Bspw. kann die gekrümmte Spiegelfläche 24 in verschiedenen Formen ausgebildet sein, bspw. als Parabolrinne. Alle Teile, die mit der Flüssigkeit oder dem Dampf in Kontakt stehen, können aus entsprechendem Edelstahl (z. B. WNr.1.4301 X5CrNi18-10, AISI 304 (V2A)) gefertigt sein, der sowohl lebensmittelecht als auch korrosionsbeständig ist und gleichzeitig gute Stabilität aufweist. Für eine bessere Lichtabsorption und damit leichtere Erwärmung kann das Absorberrohr 14, 14a geschwärzt sein.

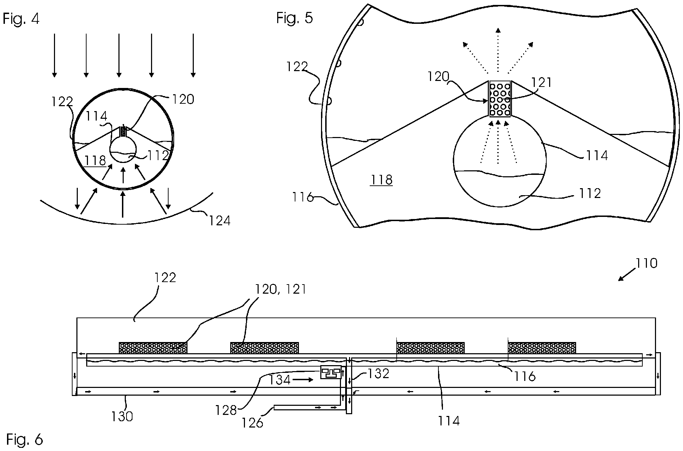

In Fig. 4-6 ist eine auf der in der Fig. 1 gezeigten ersten Ausführungsform basierende dritte Ausführungsform einer Anlage 110 dargestellt. Die Anlage 50 dient zur Extraktion von Substanzen aus einem Material durch die Nutzung des bei der Destillation anfallenden Dampfes.

In der dritten Ausführungsform sind Destillierbrücken 120, die ein Absorberrohr 114 mit einem ersten Kondensationsrohr 122 verbinden, gegenüber den Destillierbrücken 20 der ersten Ausführungsform 10 zu Verbindungsräumen 120 erweitert. Eingestrahltes Sonnenlicht, in Fig. 4 dargestellt durch Pfeile, wird durch eine geeignet gekrümmte Spiegelfläche 124 reflektiert und in Richtung auf das Absorberrohr 114 gebündelt.

Durch das Sonnenlicht erwärmt sich das Absorberrohr 114, bis es zum Verdampfen der darin gehaltenen Flüssigkeit 112 kommt, deren Dampf dann durch den Verbindungsraum 120 in das Kondensationsrohr 122 gelangt. Das Kondensationsrohr hat im gezeigten Beispiel einen nicht-runden Querschnitt, hier in Form eines Kreissegments.

In dem Verbindungsraum 120 zwischen dem Absorberrohr 114 und dem Kondensationsrohr 122 ist in einem Einsatz 121 ein Material (nicht gezeigt) angeordnet, aus dem ein Stoff extrahiert werden soll. Der Einsatz 121 ist dabei so ausgebildet, dass das zu behandelnde Material darin gehalten wird und selber nicht in das Absorberrohr 114 oder das Kondensationsrohr 122 gelangt, wobei aber der durch den Verbindungsraum 120 strömende Dampf hindurchtreten kann, also in Kontakt mit dem Material kommt. Dadurch ergibt sich die gewünschte Extraktionswirkung am Material.

Bei dem in den Zeichnungen nicht dargestellten Material kann es sich bspw. um pflanzliches Material handeln, aus dem Inhaltsstoffe extrahiert werden soll. Dies erfolgt mittels des durchströmenden Dampfs, der in Kontakt mit dem Material innerhalb des Einsatzes 121 die Inhaltsstoffe dort herauslöst und mittransportiert in das Kondensationsrohr 122. In dem sich dort bildenden Kondensat sind die extrahierten Stoffe dann gelöst.

In einem anderen Anwendungsbeispiel befindet sich im Einsatz 121 ein zu reinigendes Material, bspw. verbrauchte Aktivkohle, die zuvor als Filter eingesetzt wurde und deshalb mit Verunreinigungen durchsetzt ist. Der den Verbindungsraum 120 durchströmende Dampf kommt auch hier mit der im Einsatz 121 angeordneten Aktivkohle in Kontakt, löst die Verunreinigungen dort ab und transportiert diese mit sich. So kann die Aktivkohle gereinigt und regeneriert werden, so dass sie anschließend wieder als Filtermaterial verwendbar ist.

In den Figuren sind die Einsätze 121 in den jeweiligen Verbindungsräumen 120 zwischen Absorberrohr 114 und Kondensationsrohr 122 nur schematisch dargestellt. Während in Fig. 6 über die Länge der Vorrichtung mehrere, im gezeigten Beispiel vier separate Einsätze 121 gezeigt sind, kann selbstverständlich auch eine andere Anzahl von Durchgängen 120 mit darin eingesetzten Einsätzen 121 vorgesehen sein, ebenso kann sich der Verbindungsraum 120, ebenso wie der Einsatz 121, darin durchgehend über die ganze Länge erstrecken.

Die jeweiligen Einsätze sind dabei an das zu behandelnde Material anzupassen. Im gezeigten Beispiel sind die Einsätze 121 jeweils als geschlossene Behälter mit einer Lochblechwandung ausgebildet, so dass sie vom Dampf durchströmt werden können, dabei aber ein darin befindlicher Feststoff, wie bspw. Aktivkohle, zurückgehalten wird.

Generell sollte die Wandung des Einsatzes 121 so ausgebildet sein, dass sie das zu behandelnde Material zurückhält, dabei aber einen Durchgang des Dampfs und des zu extrahierenden Stoffs erlaubt.

Je nach zu behandelndem Material und zu extrahierendem Stoff kann ein Einsatz 121 bspw. mit einer Membran ausgerüstet sein, die für den Dampf und das zu extrahierende Material durchlässig ist. Hierbei kann es sich bspw. um ein Silikon-Material handeln.

Der Einsatz 121 ist bevorzugt wechselbar. So kann die in Fig. 4 - 6 gezeigte rohr- bzw. rinnenförmige Vorrichtung insgesamt aufklappbar sein, so dass die Einsätze 121 gewechselt werden können, um fertig behandeltes Material zu entnehmen und neu zu behandelndes Material einzulegen. Dabei können die Einsätze 121 wie Patronen verwendet werden, so dass bspw. gefüllte Einsätze entnommen und durch neue gefüllte Einsätze 121 ersetzt werden.

In einer alternativen Ausführungsform (nicht dargestellt) können die verschiedenen Einsätze 121, bzw. ein durchgängiger Einsatz 121, in Längsrichtung in der Vorrichtung einschiebbar sein.

## Patentansprüche

1. Vorrichtung zur Destillation einer Flüssigkeit mit
- mindestens einer Spiegelfläche (24, 24a, 124) zur Bündlung von Sonnenstrahlung auf ein mindestens zum Teil mit der Flüssigkeit füllbares Absorberrohr (14, 14a, 114), wobei das Absorberrohr (14. 14a, 114) zur Aufnahme von Energie aus der Sonnenstrahlung und zum Verdampfen der Flüssigkeit vorgesehen ist,
- mindestens einem ersten Kondensationsrohr (22, 22a, 122) zur Kondensation der verdampften Flüssigkeit, wobei das erste Kondensationsrohr (22, 22a,122) im Abstand von dem Absorberrohr (14, 14a, 114) angeordnet und durch mindestens eine Destillierbrücke (20, 20a, 120) mit diesem gekoppelt ist,
**dadurch gekennzeichnet, dass**
eine transparente Hülle (16, 16a, 116) vorgesehen ist, die thermisch mit dem Kondensationsrohr (22, 22a, 122) gekoppelt ist und das Absorberrohr (14, 14a, 114) umschließt, wobei ein Zwischenraum (18, 18a, 118) zwischen der Hülle (16, 16a, 116) und dem Absorberrohr (14, 14a, 114) verbleibt.

2. Vorrichtung nach Anspruch 1, bei der
- die transparente Hülle (16, 16a, 116) einen gasdicht abgeschlossenen Isolierraum (18, 18a, 118) bildet.

3. Vorrichtung nach einem der vorangehenden Ansprüche, bei der
- das Absorberrohr (14a) einen dreieckigen Querschnitt aufweist.

4. Vorrichtung nach einem der vorangehenden Ansprüche, bei der
- mindestens eine transparente Scheibe (17a, 17b) zusammen mit einem Teil der Spiegelfläche (24, 24a) die transparente Hülle (16a) bildet
- und die transparente Scheibe (17b) thermisch mit dem Kondensationsrohr (22a) gekoppelt ist.

5. Vorrichtung nach Anspruch 4, bei der
- eine erste transparente Scheibe (17a) zwischen zwei Spiegelflächen (24a) angeordnet ist,
- eine zweite transparente Scheibe (17b) unter einem Winkel an der ersten (17a) angebracht ist
- und die zweite transparente Scheibe (17b) thermisch mit dem Kondensationsrohr (22a) gekoppelt ist.

6. Vorrichtung nach einem der vorangehenden Ansprüche, bei der
- das erste Kondensationsrohr (22, 22a, 122) in Kontakt mit der Hülle (16, 16a, 116) angeordnet ist, um so bei der Kondensation entstehende Wärme durch Konduktion auf die Hülle (16, 16a, 116) zu übertragen.

7. Vorrichtung nach einem der vorangehenden Ansprüche, bei der
- das erste Kondensationsrohr (22, 122) mit einem zweiten Kondensationsrohr (30, 130) zur Aufnahme und zur Kondensation von nicht kondensiertem Dampf angeschlossen ist,
- wobei das zweite Kondensationsrohr (30, 130) in thermischem Kontakt mit der Spiegelfläche (24, 124) steht.

8. Vorrichtung nach einem der vorangehenden Ansprüche, bei der
- ein Ventil (28, 128) vorgesehen ist zur Befüllung des Absorberrohres (14, 114) mit der Flüssigkeit auf einen gewünschten Füllstand.

9. Vorrichtung nach einem der vorangehenden Ansprüche, bei der
- die Spiegelfläche (24, 24a, 124) rinnenförmig ausgebildet ist,
- und das Absorberrohr (14, 14a, 114) innerhalb der rinnenförmigen Spiegelfläche (24, 24a, 124) angeordnet ist.

10. Vorrichtung nach einem der vorangehenden Ansprüche, bei der
- ein Wärmetauscher (34, 134) vorgesehen ist, um mittels des Kondensats die zum Absorberrohr (14, 114) zugeführte Flüssigkeit vorzuwärmen.

11. Vorrichtung nach einem der vorangehenden Ansprüche, bei der
- in der Destillierbrücke (120) ein Einsatz (121) zur Aufnahme eines Stoffs oder Materials angeordnet ist.

12. Vorrichtung nach Anspruch 11, bei der
- der Einsatz (121) als Behälter mit einer für die verdampfte Flüssigkeit durchlässigen Wandung ausgebildet ist.

13. Vorrichtung nach einem der Ansprüche 11, 12, bei der
- der Einsatz (121) als Sieb ausgebildet ist.

14. Verfahren zur solaren Destillation einer Flüssigkeit, bei dem
- mindestens eine Spiegelfläche (24, 24a, 124) Sonnenstrahlung auf ein mindestens zum Teil mit einer Flüssigkeit gefülltes Absorberrohr (14, 14a, 114) bündelt,
- wobei das Absorberrohr (14, 14a, 114) Energie aus der Sonnenstrahlung aufnimmt und die Flüssigkeit verdampft,
- die verdampfte Flüssigkeit durch eine Destillierbrücke (20, 20a, 120) vom Absorberrohr (14, 14a, 114) in mindestens ein Kondensationsrohr (22, 22a, 122) strömt und dort kondensiert, wobei das Kondensationsrohr (22, 22a, 122) im Abstand von dem Absorberrohr (14, 14a, 114) angeordnet ist,
- wobei eine transparente Hülle (16, 16a, 116) vorgesehen ist, die thermisch mit dem Kondensationsrohr (22, 22a, 122) gekoppelt ist und das Absorberrohr (14, 14a, 114) umschließt, wobei ein Zwischenraum (18, 18a, 118) zwischen der Hülle (16, 16a, 116) und dem Absorberrohr (14, 14a, 114) verbleibt.

## Claims

1. A device for distilling a liquid with
- at least one mirror surface (24, 24a, 124) for focusing solar radiation onto an absorber tube (14, 14a, 114) which can be filled at least partly with the liquid, wherein the absorber tube (14, 14a, 114) is provided for taking up energy from solar radiation and for evaporating the liquid,
- at least one first condensation tube (22, 22a, 122) for condensing the evaporated liquid, wherein the first condensation tube (22, 22a, 122) is disposed at a distance from the absorber tube (14, 14a, 114) and is coupled with this by at least one distillation bridge (20, 20a, 120),
**characterized in that**
a transparent sleeve (16, 16a, 116) is provided which is coupled thermally with the condensation tube (22, 22a, 122) and surrounds the absorber tube (14, 14a, 114), wherein a space (18, 18a, 118) remains between the sleeve (16, 16a, 116) and the absorber tube (14, 14a, 114).

2. The device according to claim 1, wherein
- the transparent sleeve (16, 16a, 116) forms a gas tight, closed-off insulation space (18, 18a, 118).

3. The device according to one of the preceding claims, wherein
- the absorber tube (14a) has a triangular cross-section.

4. The device according to one of the preceding claims, wherein
- at least one transparent pane (17a, 17b), together with a portion of the mirror surface (24, 24a) forms the transparent sleeve (16a)
- and the transparent pane (17b) is coupled thermally with the condensation tube (22a).

5. The device according to claim 4, wherein
- a first transparent pane (17a) is disposed between two mirror surfaces (24a),
- a second transparent pane (17b) is attached to the first one (17a) at an angle
- and the second transparent pane (17b) is coupled thermally with the condensation tube (22a).

6. The device according to one of the preceding claims, wherein
- the first condensation pipe (22, 22a, 122) is disposed in contact with the sleeve (16, 16a, 116) in order to transfer heat, evolved during the condensation, by conduction to the sleeve (16, 16a, 116).

7. The device according to one of the preceding claims, wherein
- the first condensation tube (22, 122) is connected to a second condensation tube (30, 130) for accommodating and for condensing uncondensed vapor,
- the second condensation tube (30, 130) is in thermal contact with the mirror surface (24, 124).

8. The device according to one of the preceding claims, wherein
- a valve (28, 128) is provided for filling the absorber tube (14, 114) with the liquid to a desired level.

9. The device according to one of the preceding claims, wherein
- the mirror surface (24, 24a, 124) is constructed in the form of a trough,
- and the absorber tube (14, 14a, 114) is disposed within the trough-shaped mirror surface (24, 24a, 124).

10. The device according to one of the preceding claims, wherein
- a heat exchanger (34, 134) is provided in order to preheat the liquid, supplied to the absorber tube (14, 114) by means of the condensate.

11. The device according to one of the preceding claims, wherein
- an insert (121) for accommodating a substance or material is disposed in the distillation bridge (120).

12. The device according to claim 11, wherein
- the insert (121) is constructed as a container with a wall which is permeable to the evaporated liquid.

13. The device according to one of the claims 11, 12, wherein
- the insert (121) is constructed as a screen.

14. A method for the solar distillation of a liquid, wherein
- at least one mirror surface (24, 24a, 124) focuses solar radiation on an absorber tube (14, 14a, 114), which is filled at least partly with a liquid,
- the absorber tube (14, 14a, 114) taking up energy from the solar radiation and evaporating the liquid,
- the evaporated liquid flows through a distillation bridge (20, 20a, 120) from the absorber tube (14, 14a, 114) into at least one condensation tube (22, 22a, 122) and condenses there, the condensation tube (22, 22a, 122) being disposed at a distance from the absorber tube (14, 14a, 114),
- wherein a transparent sleeve (16, 16a, 116) is provided which is coupled thermally with the condensation tube (22, 22a, 122) and surrounds the absorber tube (14, 14a, 114), a space (18, 18a, 118) remaining between the sleeve (16, 16a, 116) and the absorber tube (14, 14a, 114).

## Revendications

1. Dispositif destiné à la distillation d'un liquide, avec
- au moins une surface réfléchissante (24, 24a, 124) destinée à concentrer le rayonnement solaire sur un tube absorbant (14, 14a, 114) susceptible d'être au moins partiellement rempli avec le liquide, le tube absorbant (14, 14a, 114) étant destiné à recevoir de l'énergie à partir du rayonnement solaire et à faire évaporer le liquide,
- au moins un premier tube de condensation (22, 22a, 122) destiné à condenser le liquide évaporé, le premier tube de condensation (22, 22a, 122) étant agencé à distance du tube absorbant (14, 14a, 114) et accouplé à celui-ci par au moins un pont de distillation (20, 20a, 120),
**caractérisé en ce que**
il est prévu une gaine transparente (16, 16a, 116) couplée thermiquement au tube de condensation (22, 22a, 122) et entourant le tube absorbant (14, 14a, 114), un espace intermédiaire (18, 18a, 118) demeurant entre la gaine (16, 16a, 116) et le tube absorbant (14, 14a, 114).

2. Dispositif selon la revendication 1, dans lequel
- la gaine transparente (16, 16a, 116) forme un espace isolant fermé étanche au gaz (18, 18a, 118).

3. Dispositif selon l'une des revendications précédentes, dans lequel
- le tube absorbant (14a) présente une section transversale triangulaire.

4. Dispositif selon l'une des revendications précédentes, dans lequel
- au moins une vitre transparente (17a, 17b) forme la gaine transparente (16a) ensemble avec une partie de la surface réfléchissante (24, 24a),
- et la vitre transparente (17b) est couplée thermiquement au tube de condensation (22a).

5. Dispositif selon la revendication 4, dans lequel
- une première vitre transparente (17a) est agencée entre deux surfaces réfléchissantes (24a),
- une deuxième vitre transparente (17b) est fixée à la première (17a) en formant un angle,
- et la deuxième vitre transparente (17b) est couplée thermiquement au tube de condensation (22a).

6. Dispositif selon l'une des revendications précédentes, dans lequel
- le premier tube de condensation (22, 22a, 122) est agencé en contact avec la gaine (16, 16a, 116), afin de transmettre ainsi de la chaleur générée pendant la condensation à la gaine (16, 16a, 116) par conduction.

7. Dispositif selon l'une des revendications précédentes, dans lequel
- le premier tube de condensation (22, 122) est raccordé à un deuxième tube de condensation (30, 130) pour la réception et la condensation de vapeur non condensée,
- le deuxième tube de condensation (30, 130) est en contact thermique avec la surface réfléchissante (24, 124).

8. Dispositif selon l'une des revendications précédentes, dans lequel
- il est prévu une soupape (28, 128) pour le remplissage du tube absorbant (14, 114) avec le liquide à un niveau de remplissage souhaité.

9. Dispositif selon l'une des revendications précédentes, dans lequel
- la surface réfléchissante (24, 24a, 124) est conçue en forme de gouttière,
- et le tube absorbant (14, 14a, 114) est agencé à l'intérieur de la surface réfléchissante en forme de gouttière (24, 24a, 124).

10. Dispositif selon l'une des revendications précédentes, dans lequel
- il est prévu un échangeur de chaleur (34, 134) destiné à préchauffer le liquide guidé vers le tube absorbant (14, 114) au moyen du condensat.

11. Dispositif selon l'une des revendications précédentes, dans lequel
- un insert (121) est agencé dans le pont de distillation (120) pour la réception d'une substance ou d'un matériau.

12. Dispositif selon la revendication 11, dans lequel
- l'insert (121) est conçu comme un récipient avec une paroi perméable au liquide évaporé.

13. Dispositif selon l'une des revendications 11, 12, dans lequel
- l'insert (121) est conçu comme un tamis.

14. Procédé de distillation solaire d'un liquide, dans lequel
- au moins une surface réfléchissante (24, 24a, 124) concentre le rayonnement solaire sur un tube absorbant (14, 14a, 114) rempli au moins partiellement avec un liquide,
- le tube absorbant (14, 14a, 114) reçoit de l'énergie à partir du rayonnement solaire et fait évaporer le liquide,
- le liquide évaporé traverse un pont de distillation (20, 20a, 120) et s'écoule du tube absorbant (14, 14a, 114) vers au moins un tube de condensation (22, 22a, 122), où il condense, le tube de condensation (22, 22a, 122) étant agencé à distance du tube absorbant (14, 14a, 114),
- il est prévu une gaine transparente (16, 16a, 116) couplée thermiquement au tube de condensation (22, 22a, 122) et entourant le tube absorbant (14, 14a, 114), un espace intermédiaire (18, 18a, 118) demeurant entre la gaine (16, 16a, 116) et le tube absorbant (14, 14a, 114).
